Europäisches Patentamt

European Patent Office

Office européen des brevets

(11) Veröffentlichungsnummer : **0 129 864**
**B1**

# (12) EUROPÄISCHE PATENTSCHRIFT

(45) Veröffentlichungstag der Patentschrift :
04.03.87

(51) Int. Cl.⁴ : **A 22 C 11/00**

(21) Anmeldenummer : **84107159.0**

(22) Anmeldetag : **22.06.84**

(54) **Verfahren und Vorrichtung zum Aufreihen von auf Füllautomaten hergestellten Einzelwürsten auf Rauch- oder Kochstäbe.**

(30) Priorität : 24.06.83 DE 3322759

(43) Veröffentlichungstag der Anmeldung :
02.01.85 Patentblatt 85/01

(45) Bekanntmachung des Hinweises auf die Patenterteilung : 04.03.87 Patentblatt 87/10

(84) Benannte Vertragsstaaten :
AT BE CH FR GB IT LI NL SE

(56) Entgegenhaltungen :
EP-A- 0 030 755
DE-A- 2 529 821
DE-A- 2 730 121
DE-A- 3 109 995
DE-A- 3 206 956
FR-A- 1 103 444
US-A- 3 624 774

(73) Patentinhaber : **Kollross, Günter**
**Am Wallerstädter Weg 20**
**D-6080 Gross Gerau-Dornheim (DE)**

(72) Erfinder : **Kollross, Günter**
**Am Wallerstädter Weg 20**
**D-6080 Gross Gerau-Dornheim (DE)**

(74) Vertreter : **Beyer, Werner, Dipl.-Ing.**
**Staufenstrasse 36, II P.O. Box 174109**
**D-6000 Frankfurt/Main (DE)**

## Beschreibung

Die Erfindung betrifft ein Verfahren zum Aufreihen von auf Füllautomaten hergestellten Einzelwürsten auf Rauch- oder Kochstäbe mit Hilfe von Aufhängelementen, die nach dem Füllen beim Verschließen der gefüllten Wursthüllenabschnitte einzeln jeweils einer Verschlußklammer vorgelegt und von dieser eingebunden werden, sowie eine Vorrichtung zur Durchführung eines solchen Verfahrens.

Viele Wurstsorten vor allem größeren Kalibers bedürfen nach ihrer Herstellung auf den Füllautomaten noch einer besonderen Behandlung in Rauchkammern oder Kochbädern. Hierzu ist es bekannt, die Würste bei ihrer Herstellung an einem Wurstende mit einem Aufhängelement, zumeist in Gestalt einer Aufhängeschlaufe, zu versehen, an dem sie auf sogenannte Rauch- oder Kochstäbe für eine derartige Nachbehandlung aufgehängt werden.

Bisher wird ein solches Aufreihen der Würste auf die Rauch- oder Kochstäbe von Hand durch Hilfskräfte vorgenommen, welche die vom Füllautomaten gefertigten und auf Fördereinrichtungen beliebiger Art zugeführten Würste einzeln aufnehmen und auf den hierzu meist nur an einem Ende gehalterten Rauch oder Kochstab aufhängen. Diese Arbeit ist mühsam und kräftezehrend und erhöht durch das erforderliche Personal den Lohnanteil der Herstellungskosten beträchtlich.

Aufgabe der Erfindung ist es, diesen manuellen Arbeitsgang zu vermeiden und dadurch die Herstellungskosten zu senken. Erfindungsgemäß wird diese Aufgabe dadurch gelöst, daß die Aufhängelemente beim Vorlegen vor die Verschlußklammer von einem Führungselement erfasst und von diesem mit der angebundenen Wurst auf dem Rauch- bzw. Kochstab geleitet werden.

Durch die Erfindung entfällt das mühsame Handhaben der Würste zum Zwecke des Aufhängens an den Rauch- bzw. Kochstäben, und es wird nur noch Personal zum Abtransportieren der aufgereihten Wurste zur Rauchkammer bzw. zum Kochbad benötigt, was in bekannter Weise auf entsprechend ausgebildeten Wagen erfolgen kann. Die Herstellungskosten für die Würste werden dadurch erheblich gesenkt.

Das erfindungsgemäße Verfahren lässt sich auf zweierlei Arten ausführen. Nach einem ersten Merkmal zur Durchführung des erfindungsgemäßen Verfahrens wird das Führungselement wenigstens nach dem Einbinden des Aufhängelements stillstehend gehalten, und das Aufhängelement wird auf dem Führungselement gleitend zu dem Rauch- bzw. Kochstab bewegt. Hierbei ist es besonders zweckmäßig, wenn das Führungselement zur Ausnutzung der Schwerkraft für das Gleiten der Aufhängelemente geneigt gehalten wird. Andererseits bzw. zusätzlich kann die Gleitbewegung des Aufhängelements auf dem Führungselement auch durch eine motorisch erzeugte Kraft vorgenommen oder zumindest unterstützt werden.

Eine andere Art zur Durchführung des erfindungsgemäßen Verfahrens zeichnet sich dadurch aus, daß zur Beförderung des Aufhängelements mit der daran angebundenen Wurst zum Rauch- bzw. Kochstab das Führungselement selbst bewegt wird.

Die Aufhängelemente selbst können verschieden gestaltet sein. Besonders zweckmäßig ist es jedoch, wenn als Aufhängelemente vorgefertigte oder mit dem Vorlegen bzw. Einbinden erst gebildete Aufhängeschlaufen verwendet werden und die Rauch- bzw. Kochstäbe zur Aufnahme der Aufhängeschlaufen in bekannter Weise an einem Ende fliegend gehaltert werden.

Die Erfindung lässt sich besonders vorteilhaft in Verbindung mit einer vor der Füllrohrmündung des Füllautomaten angeordneten Einschnür- und Klammersetzeinrichtung, der eine Einrichtung zum einzelweisen Vorlegen von vorgefertigten, geöffneten Aufhängeschlaufen in die Bewegungsbahn eines der Einschnürwerkzeuge zugeordnet ist, verwirklichen. Solche Anordnungen sind aus der Praxis bekannt, wobei die Schlaufen beispielsweise von Gurten abgenommen werden, auf denen sie in größeren Mengen magaziniert sind (vgl. DE-C-2 352 00 und DE-A-3 147 386). Ebenso ist es aber auch möglich, daß die Schlaufen erst unmittelbar beim Vorlegen bzw. Einbinden in den Klammerverschluß gebildet werden.

In Verbindung mit einer solchen Anordnung zeichnet sich eine Vorrichtung zur praktischen Durchführung des erfindungsgemäßen Verfahrens in weiterer Ausgestaltung der Erfindung aus durch einen in die vorgelegte Aufhängeschlaufe gleichzeitig mit dem Einschnürwerkzeug einführbaren Greifer, der einen Teil einer Führungseinrichtung zum Überführen der Aufhängeschlaufe mit der angebundenen Wurst auf einen fliegend gehalterten Rauch- oder Kochstab bildet.

Je nach der einen oder anderen der oben angegebenen Arten zur Durchführung des erfindungsgemäßen Verfahrens ist auch die Vorrichtung besonders gestaltet. Im ersteren Fall besteht diese Gestaltung vorzugsweise darin, daß der Greifer an dem einen Ende einer sich im wesentlichen in Brätausstoßrichtung erstreckenden Führungsschiene angeordnet ist, deren anderes Ende an den Rauch- bzw. Kochstab anschließbar ist. Hierzu ist es von Vorteil, wenn die Führungsschiene zu dem Rauch- bzw. Kochstab hin geneigt angeordnet ist, und es können die Rauch- bzw. Kochstäbe gleichfalls geneigt angeordnet sein, so daß die Würste unter Schwerkraftwirkung über die Führungsschiene zu dem daran angeschlossenen Rauch- bzw. Kochstab und auf diesem weiter zur engen Anlage aneinander zu gleiten vermögen.

Nach einem anderen Merkmals zur vorteilhaften Ausgestaltung einer solchen Vorrichtung ist die Führungsschiene von zwei oder mehreren Klemmeinrichtungen gehaltert, die zur Freigabe für die über die Führungsschiene gleitenden Aufhängeschlaufen nach einander aufsteuerbar sind. Hierzu sind den Klemmeinrichtungen zweckmäßig die Gleitbewegung der Aufhängeschlaufen auf der Führungsschiene erfassende Fühler zum vorübergehenden Aufsteuern der Klemmeinrichtung zugeordnet, die als mechanische Tastfühler ausgebildet oder von Fotozellen mit gegenüberstehenden Lichtquellen oder auf sonstige Weise gebildet sein können.

Bei entsprechender Ausbildung des Vorlegemechanismus für die Schlaufen kann die Schlaufe auf den Greifer beim Vorlegen gebracht werden, so daß es keiner besonderen Greiferbewegung zum Erfassen der Schlaufen bedarf. Da das Schlaufenmaterial jedoch in der Regel eine verhältnismäßig große Instabilität aufweist, wird es meistens sicherer sein, den Greifer positiv in die Schlaufe einzuführen, was nach einem besonderen Ausgestaltungsmerkmal der vorerwähnten erfindungsgemäßen Vorrichtung dadurch verwirklicht werden kann, daß die Kleimmeinrichtungen und gegebenenfalls die Fühler in Längsrichtung der Führungsschiene verschieblich gelagert sind und daß eine Betätigungseinrichtung vorgesehen ist, von welcher die Klemmeinrichtungen und die Fühler zum Einführen des Greifers in die vorgelegte Aufhängeschlaufe gesteuert hin und her verschiebbar sind.

Bei der Verwendung von raupenförmig in größeren Längen gerafftem Schlauchmaterial zur Herstellung der Würste auf dem Füllautomaten, daß unter Abzug vom Füllrohr abschnittsweise mit Brät gefüllt, durch je zwei Verschlußklammern verschlossen und zwischen diesen zu Einzelwürsten abgetrennt wird, kann die Aufhängeschlaufe wahlweise in die vordere oder hintere der beiden gleichzeitig gesetzten Verschlußklammern eingebunden werden. Beim Einbinden in die hintere Verschlußklammer, die das vordere Ende des anschließend erst zu füllenden Schlauchabschnitts für die nächste Wurst verschließt, wird die Schlaufe durch den nachfolgenden Füllvorgang von selbst auf der Führungsschiene gleitend in Richtung zum Rauch- bzw. Kochstab verschoben, auf den sie dann durch entsprechende Neigung der Führungsschiene und des Rauch- oder Kochstabs von selbst weiter gleiten kann. Die Verwendung der hinteren Verschlußklammer zum Einbinden der Aufhängeschlaufe birgt jedoch die Gefahr in sich, daß im Falle einer unvorhergesehenen Hemmung der Gleitbewegung die Schlaufe vom Wurstzipfel abreißt oder aber die Wurst platzt, was wegen des dabei entstehenden Verlustes und der sonstigen Unannehmlichkeiten vermieden werden sollte. Es ist deshalb vorteilhafter, die Aufhängeschlaufe in die vordere Verschlußklammer einzubinden, die den hinteren Zipfel der bereits gefüllten und mit dem Abtrennen vereinzelten Wurst darstellt, wie dies im übrigen auch stets dann geschieht, wenn vorgefertigte, d. h. am vorderen Ende bereits vorher verschlossene Einzelwursthüllen auf dem Füllautomaten verarbeitet werden. In diesem Fall ist es zweckmäßig, wenn nach einem besonderen Ausgestaltungsmerkmal der vorerwähnten Vorrichtung eine sich unterhalb der Ausstoßbahn der Wurst erstreckende, antreibbare Fördervorrichtung vorgesehen ist, von welcher die Würste zu dem Rauch- bzw. Kochstab befördert werden.

Eine Vorrichtung zur Durchführung der zweiten Art des erfindungsgemäßen Verfahrens zeichnet sich schließlich nach einem weiteren Ausgestaltungsmerkmal der Erfindung dadurch aus, die Führungseinrichtung von einem endlosen Band- oder Kettentrieb gebildet ist, an welchem ein oder mehrere die Aufhängeschlaufen erfassende und dem Rauch- bzw. Kochstab zuführende Mitnehmerhaken angeordnet sind.

Ein besonderes Ausgestaltungsmerkmal der erfindungsgemäßen Vorrichtung zeichnet sich schließlich aus durch eine an die Führungseinrichtung anschließende Halterung für die Rauch- bzw. Kochstäbe, bestehend aus einem Ständer und einem darauf drehbar und um gleiche Teilungswinkel fortschaltbaren Kopf mit Fassungen zur Aufnahme einer entsprechenden Anzahl von Stäben in sternförmiger Anordnung von denen jeweils einer an die Führungseinrichtung anschließt.

Die Erfindung wird nachstehend anhang eines in der Zeichnung dargestellten Ausführungsbeispiel für eine Vorrichtung zur Durchführung der ersten Art des erfindungsgemäßen Verfahren näher erläutert. Es zeigen :

Figur 1 in schematischer Darstellung die Seitenansicht einer Anlage zur Herstellung von Einzelwürsten, bei welcher eine Aufreihvorrichtung gemäß der Erfindung verwendet ist,

Figur 2 eine Draufsicht zu Figur 1,

Figur 3 in größerem Maßstab eine Stirnansicht der Einschnür- und Verschließeinrichtung und der Schlaufenvorlegeeinrichtung der in Fig. 1 und 2 gezeigten Anlage bei geöffneten Einschnürwerkzeugen, betrachtet in Richtung des Pfeils III in Fig. 1,

Figur 4 eine Seitenansicht zur Fig. 3 während des Füllens eines Schlauchhüllenabschnitts auf die Länge einer Wurst,

Figur 5 eine Draufsicht zu Fig. 3 und 4,

Figur 6 eine Klemmeinrichtung für die Führungsstange der Aufreihvorrichtung,

Figur 7 die gleiche Stirnansicht wie in Fig. 3 bei betätigten Einschnür- und Verschließwerkzeugen nach Beendigung des Füllvorgangs,

Figur 8 eine Seitenansicht zu Fig. 7,

Figur 9 eine Draufsicht zu Fig. 7,

Figur 10 dieselbe Draufsicht wie in den Fig. 5 und 9 in einem späteren Zeitpunkt beim Abfördern der abgeteilten Wurst.

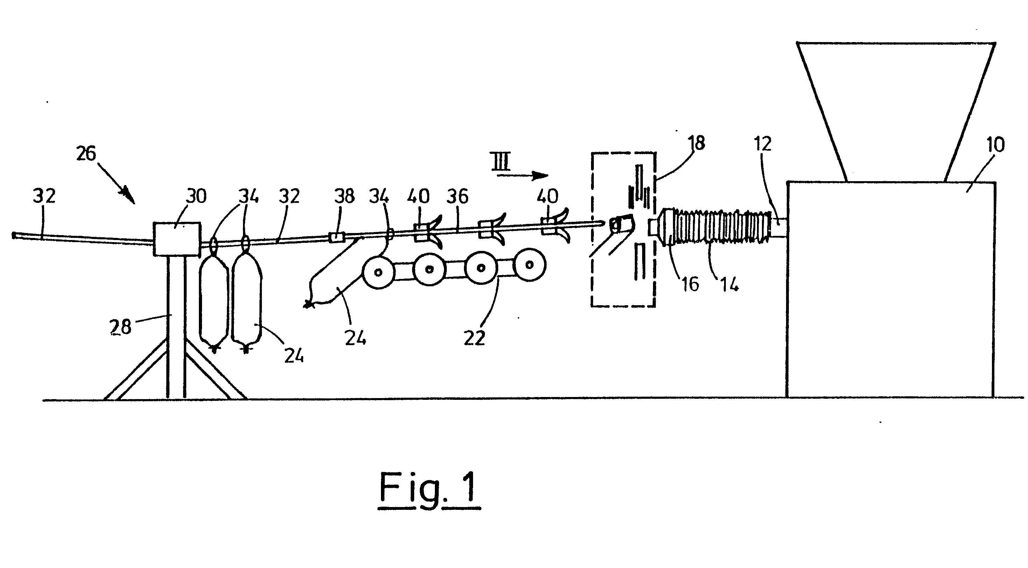

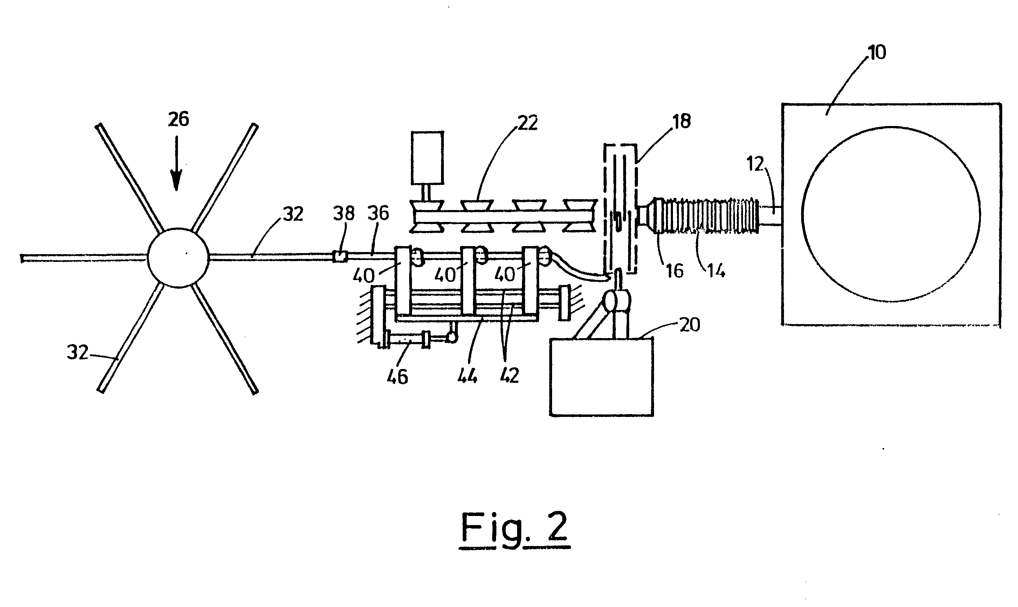

In den Fig. 1 und 2 ist mit 10 ein Wurstfüllautomat bezeichnet. Der Füllautomat 10 hat ein Füllrohr 12 zur Aufnahme von raupenförmig gerafften Schlauchhüllenmaterial 14, das am vorderen, über die Füllrohrmündung überstehenden Ende verschlossen ist und beim Füllen mit Brät durch das Füllrohr 12 durch eine elastisch das Füllrohrende übergreifende sogenannte Darmbremse 16 hindurch abgezogen wird.

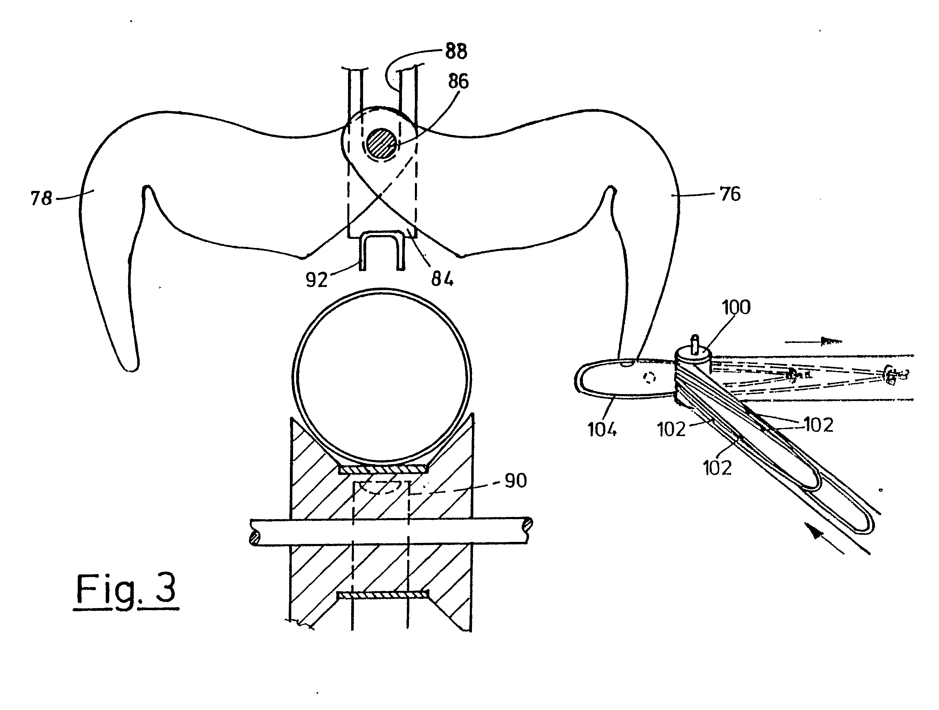

Vor der Mündung des Füllrohrs 12 ist eine in ihrer Gesamtheit mit 18 bezeichnete Einschnür- und Verschließeinrichtung angeordnet, die an späterer Stelle in Verbindung mit den Figuren 3 bis 5 und 7 bis 9 noch näher erläutert wird und die Aufgabe hat, das abschnittsweise mit Brät gefüllte Schlauchmaterial zu verschließen und zu Einzelwürsten abzuteilen.

Der Einschnür- und Verschließeinrichtung 18 ist eine schematisch bei 20 angedeutete Schlaufenzuführeinrichtung zugeordnet. An die Einschnür- und Verschließeinrichtung 18 schließt sich ferner eine geringfügig nach abwärts geneigte Bandfördereinrichtung 22 an, von welcher die vom Füllautomaten 10 und der Einschnür- und Verschließeinrichtung 18 hergestellten und abgeteilten Würste 24 in Richtung zu einer Aufnahmeeinrichtung 26 transportiert werden. Die Aufnahmeeinrichtung 26 besteht aus einem Ständer 28 mit einem um die Ständerachse drehbaren Kopf 30, der mit beispielsweise sechs am Umfang verteilten Fassungen zum Einstecken von Rauch- oder Kochstäben 32 versehen ist. Die eingesteckten Rauch- oder Kochstäbe 32 sind somit in der Aufnahmeeinrichtung 26 in Gestalt eines Sterns fliegend gehalten und durch entsprechende Ausbildung der Fassungen geringfügig nach aufwärts gerichtet. Während der Beförderung der Würste 24 auf der von einem (nicht gezeigten) Antriebsmotor angetriebenen Bandfördereinrichtung 22 sind die von der Einschnür-Verschließeinrichtung in das hintere Wurstende eingebundenen Schlaufen 34 der Würste 24 längs einer geneigt verlaufenden Führungsschiene 36 geführt, deren höheres vorderes Ende greiferförmig ausgebildet ist und deren hinteres, tieferes Ende 38 jeweils einen der von der Aufnahmeeinrichtung 26 gehalterten Rauch- bzw. Kochstäbe 32 derart übergreift, daß die Schlaufen 34 der Würste 24 von der Führungsschiene 36 ungehindert auf den Rauch- bzw. Kochstab 32 hinübergleiten können.

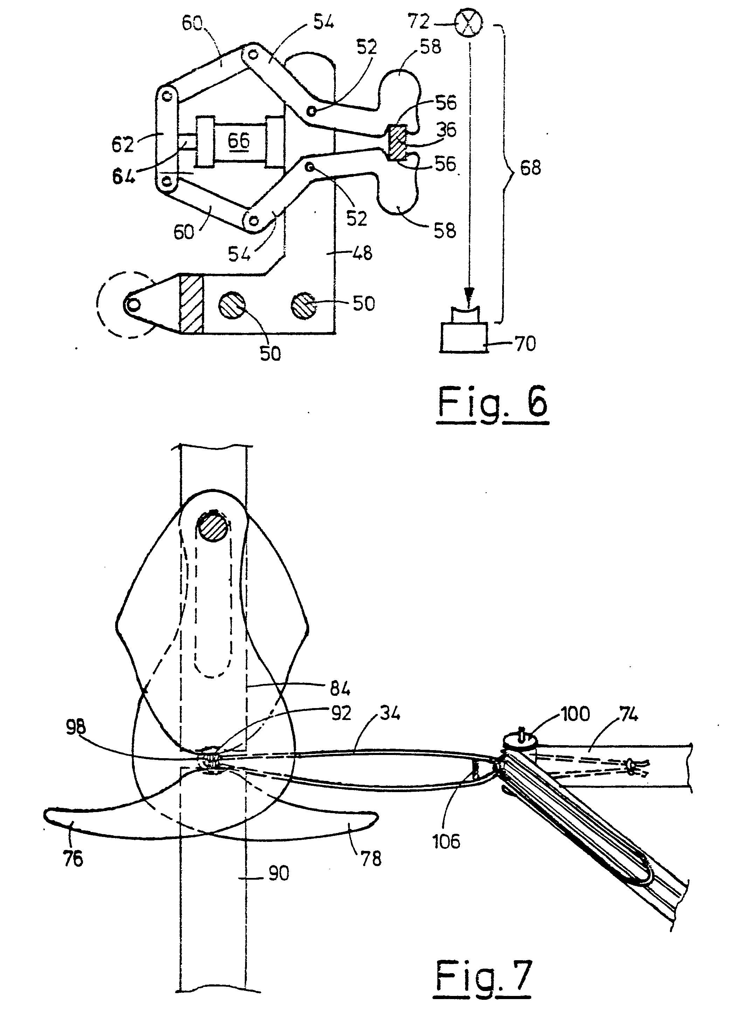

Die Führungsschiene 36 wird im Beispielsfall von drei identisch ausgebildeten Klemmeinrichtungen 40 (Fig. 6) gehalten, die auf zwei parallelen Schlittenführungsstangen 42 verschieblich angeordnet und durch einen an einer Verbindungsstange 44 angreifenden Kraftzylinder 46 gemeinsam in Längsrichtung der Führungsstange 36 um ca. 50 mm hin und her bewegbar sind.

Wie Fig. 6 im einzelnen zeigt, besteht eine jede Klemmeinrichtung 40 aus einem L-förmigen Halter 48, dessen horizontaler Schenkel Bohrungen 50 aufweist, mit denen der Halter 48 verschieblich auf den Schlittenführungsstangen 42 gelagert ist. Der senkrechte Schenkel des Halters 48 lagert auf Bolzen 52 zwei spiegelbildlich identisch ausgebildete doppelarmige Klemmhebel 54, deren eine Arme Maulöffnungen 56 zur Aufnahme und Klemmung der Führungsschiene 36 aufweisen. Auf der zur Füllmaschine hin gerichteten Seite sind an diese Arme Ansätze 58 zur Bildung einer Einlauftulpe angeformt. Die anderen, voneinander weggebogenen Arme der Klemmhebel 54 sind über Koppeln 60 gelenkig mit einer Traverse 62 verbunden, die an der Kolbenstange 64 eines am Halter 48 befestigten doppelt wirkenden pneumatischen Kraftzylinders 66 angebracht ist. Beim Ausfahren der Kolbenstange 64 werden die Klemmhebel 54 mit ihren die Maulöffnungen 56 enthaltenden Armen voneinander weggeschwenkt und dadurch die Klemmeinrichtung geöffnet, während beim Einziehen der Kolbenstange 54 die Klemmeinrichtung schließt und die Führungsschiene 36 erfasst und festhält.

Jeder Klemmeinrichtung 40 ist eine Fühleinrichtung 68 zugeordnet, die beim Ausführungsbeispiel aus einer Fotozelle 70 mit einer gegenüberstehenden Lichtquelle 72 besteht. Die Fühleinrichtung 68 befindet sich, in Längsrichtung der Führungsschiene 34 betrachtet, jeweils in einem bestimmten Abstand vor der zugehörigen Klemmeinrichtung 40 und ist gegenüber der Führungsschiene 34 derart seitlich versetzt, daß die Aufhängeschlaufen beim Gleiten auf der Führungsschiene 34 durch den Lichtstrahl der Lichtquelle 72 hindurchlaufen und dadurch in der Fotozelle 70 ein Signal auslösen, das in einer (nicht gezeigten) elektronischen Steuereinrichtung zu einem Impuls zum Aufsteuern eines dem Kraftzylinder 66 der nachfolgenden Klemmeinrichtung 40 zugeordneten (gleichfalls nicht gezeigten) Magnetventils verarbeitet wird. Der Impuls zum Aufsteuern des Magnetventils kann durch eine entsprechende Ausbildung der elektronischen Schaltung für eine bestimmte Zeitdauer gehalten werden, die dazu ausreicht, daß die Aufhängeschlaufe die geöffnete Klemmeinrichtung passiert. Ebenso ist es aber auch möglich, das Impulsende mit Hilfe der nächsten Fühleinrichtung 68 zu steuern und hinter der letzten Klemmeinrichtung 40 eine weitere Fühleinrichtung anzuordnen, die, wenn sie von der Aufhängeschlaufe angesteuert wird, den Öffnungsimpuls für die letzte Klemmeinrichtung abschaltet.

Anstelle der in der Zeichnung angedeuteten fotoelektrischen Fühleinrichtung können auch andere bekannte Fühleinrichtungen wie insbesondere mechanische Tastfühler verwendet werden, die elektrische Kontakte betätigen.

Die Fig. 3 bis 5 und 7 bis 10 zeigen in größerem Maßstab die Ausbildung der Einschür- und Verschließeinrichtung 18 sowie einen Teil der Schlaufenzufuhreinrichtung 20, mit welcher die auf einem Gurt 74 in geöffneter Stellung hintereinander aufgereihten Schlaufen 34 einer Scherenbacke 76 der Einschnür- und Verschließeinrichtung 18 vorgelegt werden. Die Einschnür- und Verschließeinrichtung 18 hat vier solche Scherenbacken 76, 78, 80, 82, die paarweise vor bzw. hinter einem Klippstempel 84 angeordnet und um eine Achse 86 verschwenkbar sind, die ein Langloch 88 im Klippstempel 84 durchsetzt. Unterhalb des Klippstempels ist ein Gegenstempel 90 angeordnet, und es sind (nicht gezeigte) Antriebsmittel vorhanden, mit denen in bekannter Weise die Scherenbacken aus der in Fig. 3 gezeigten Offenstellung in die in Fig. 7 gezeigte Einschnürstellung verschwenkt und dabei gleichzeitig der Klippstempel 84 und der Gegenstempel 90 gegeneinander zum Stetzen zweier Verschlußklammern 92 im Abstand zueinander bewegt werden können. Der Klippstempel 84 trägt ferner in der Mitte ein Schneidmesser 94, das beim Gegeneinanderbewegen von Klippstempel und Gegenstempel in eine entsprechende Aussparung 96 des Gegenstempels eingreift und das von den Scherenbacken 76, 78 bzw. 80, 82 eingeschnürte Schlauchhüllenmaterial 98 gleichzeitig mit dem Setzen der Verschlußklammern 92 zwischen diesen durchtrennt.

Einschnür- und Verschließeinrichtungen dieser Art sind bekannt und bedürfen deshalb keiner weiterer Erläuterung.

Die Schlaufenzuführeinrichtung 20 hat eine Umlenkrolle 100 für den Trägergurt 74 in Gestalt eines Kunststoffbandes, auf welchem Aufhängeschlaufen 34 in geöffnetem Zustand mit Längsabstand durch Schweißung oder Klebung ihrer Schenkel bei 102 angeheftet sind. Der Trägergurt ist in regelmäßigen Abständen mit (nicht gezeigten) Perforierungen versehen, in welche die Zähne eines (gleichfalls nicht gezeigten) Schaltrades eingreifen, von welchem der Gurt schrittweise im Synchronismus mit dem Füllen, Verschließen und Abteilen der Würste um jeweils eine Teilung der hintereinander aufgereihten Aufhängeschlaufen 20 weiter geschaltet wird.

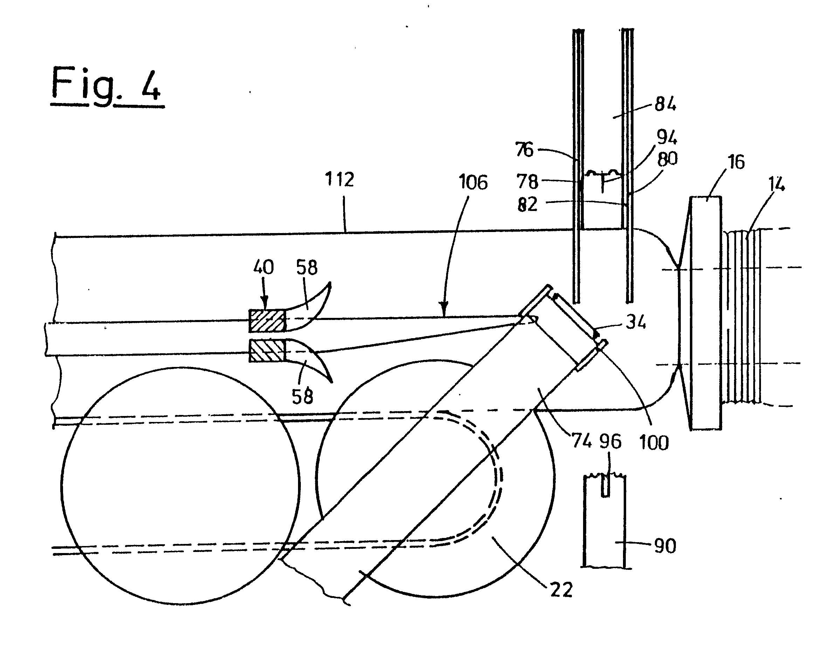

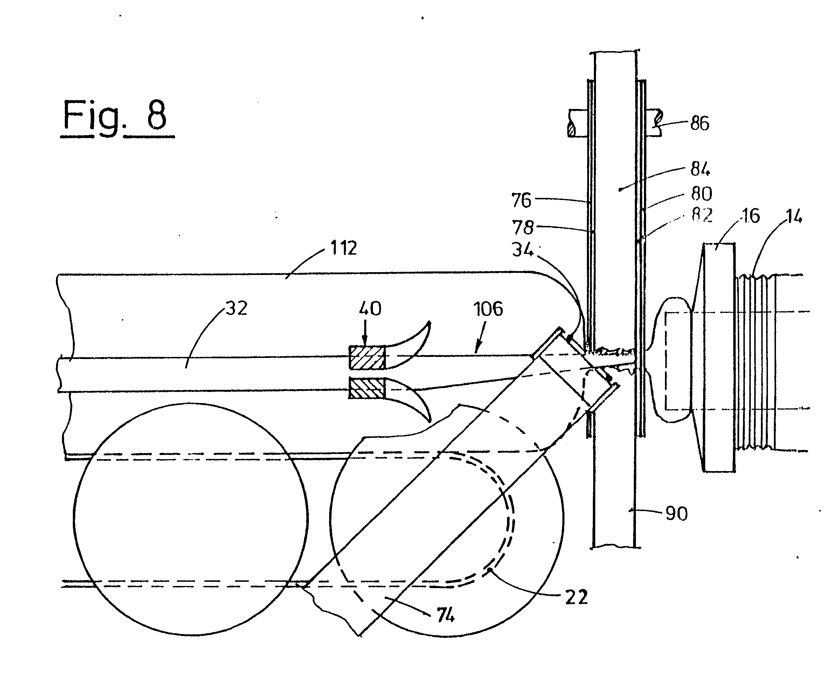

Die Achse der Umlenkrolle 100 ist, wie insbesondere aus den Fig. 4 und 8 ersichtlich, unter einem Winkel von etwa 45° zur Senkrechten bzw. Waagerechten schräg gestellt, und die Aufhängeschlaufen 34 sind derart auf dem Trägergurt 74 aufgereiht, daß ihre Knotenenden vorauseilen und von den Henkelenden einer oder mehrerer in Vorschubrichtung davor befindlicher Schlaufen überdeckt werden. Durch diese Anordnung wird in Verbindung mit der schräggestellten Umlenkrolle 100 erreicht, daß mit jeder Weiterschaltung des Trägergurts 74 da am Trägergurt nicht festgelegte Henkel 104 einer jeden Aufhängeschlaufe, wie in den Fig. 3 bis 5 gezeigt, frei in den Eingriffsbereich der Scherenbacke 76 vorsteht, um von dieser beim Schließen der Scherenbacken erfasst und vor die Verschlußklammer 92 unter gleichzeitiger Ablösung vom Trägergurt 74 mitgenommen zu werden, wie dies in den Fig. 7 bis 9 dargestellt ist.

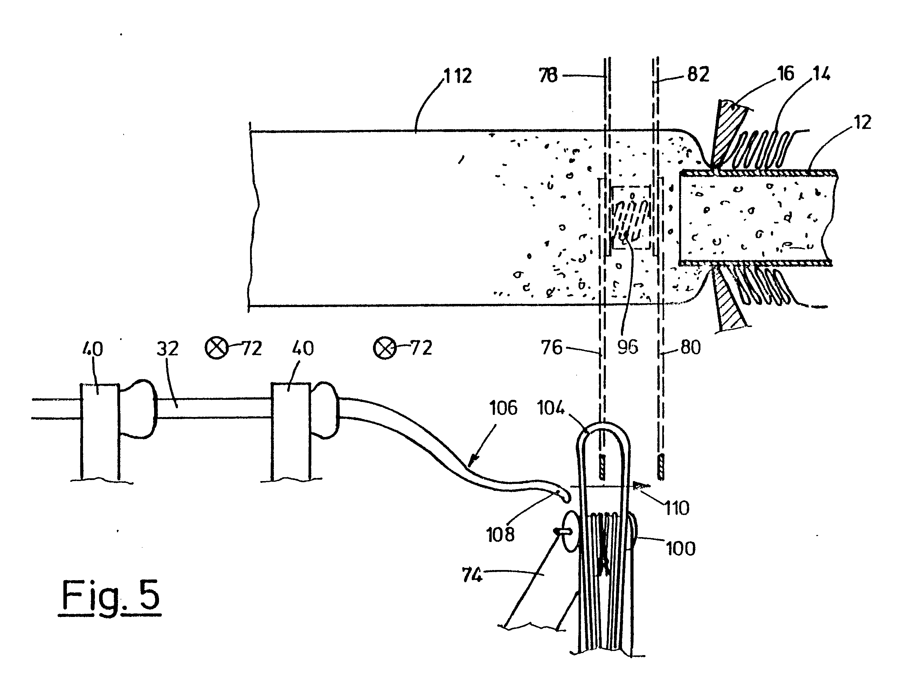

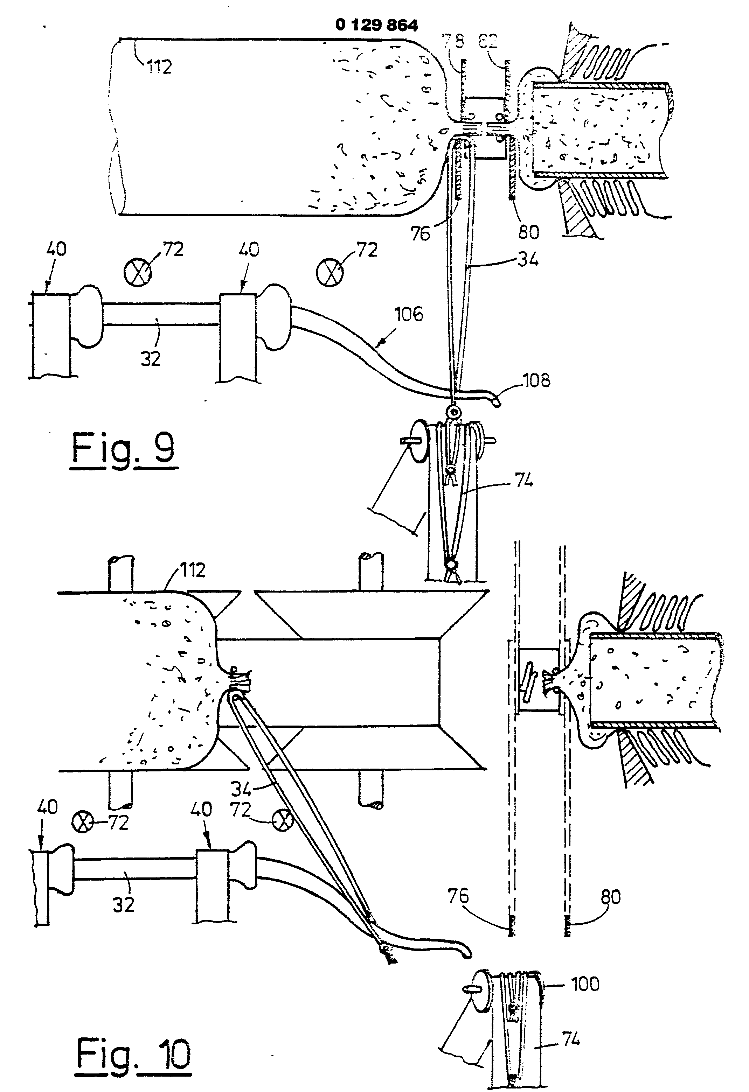

Wie bereits erwähnt, ist das vordere Ende der Führungsschiene 36 in Gestalt eines Greifers 106 ausgebildet, der bei eingezogenem Kraftzylinder 46 (Fig. 2) vor der Schlaufenzuführeinrichtung 20 endet (Fig. 4 und 5). Der Greifer 106 besteht aus einer geschwungenen Abkröpfung des sich im Querschnitt verjüngenden vorderen Teils der Führungsschiene 36, der am äußersten Ende nochmals bei 108 nach auswärts zur Bildung eines Fanghakens 108 abgebogen ist. Durch Ausfahren des Kraftzylinders 46 wird die von den Klemmeinrichtungen 40 erfasste Führungsschiene 36 in Richtung des Pfeils 110 in Fig. 5 im

gleichen Augenblick, in welchem die Scherenbacken 76 bis 82 schließen, vorbewegt, und erfasst zusammen mit der Scherenbacke 76 das Schlaufenende 104 der Aufhängeschlaufe 34, das wie die Fig. 7 und 9 zeigen, beim weiteren Schließen der Scherenbacken von dem Greifer 106 festgehalten wird. Hierauf folgt in oben beschriebener Weise das Setzen der Verschlußklammern und Abtrennen des gefüllten Wursthüllenabschnitts 112 vom Hüllenmaterial 98, der als einzelne Wurst von der Bandfördereinrichtung 22 nach dem Wiederöffnen der Scherenbacken 76 bis 82 in Richtung zum Rauch- oder Kochstab 32 gefördert und auf diesem überführt wird. Gleichzeitig mit dieser Förderbewegung wird der Kraftzylinder 46 wieder eingefahren (Fig. 10), und die von der Wurst nachgezogene Aufhängeschlaufe 34 gleitet über die Führungsschiene 36 hinweg. Dabei betätigt die Aufhängeschlaufe 34 nacheinander die Fühleinrichtungen und löst über diese die Öffnung der Klemmeinrichtungen 40 aus, so daß die Schlaufe ungehindert zum anderen Ende der Führungsschiene 36 und von dort weiter zu dem Rauch- bzw. Kochstab 32 gelangen kann, auf welchem die daran hängende Wurst 112 schließlich in hängender Lage aufgereiht wird.

Die Aufnahmeeinrichtung 26 kann mit einem (nichtgezeigten) Schaltantrieb zum schrittweisen Drehen des Kopfes 30 versehen sein, und es kann eine Zähleinrichtung vorgesehen sein, die die Anzahl der auf einen Rauch- oder Kochstab 32 aufgereihten Würste zählt, um nach Erreichen einer bestimmten Anzahl dem Schaltantrieb ein Signal zur Weiterschaltung zu geben. Als Zähleinrichtung kann auch eine der Fülleinrichtungen 68 in Verbindung mit der elektronischen Steuereinrichtung herangezogen werden. Die hierzu erforderlichen Maßnahmen sind dem Fachmann auf dem Steuerungsgebiet geläufig, so daß es hierzu keiner weiteren Erläuterung bedarf.

Der beanspruchte Patentschutz ist nicht auf die Verwendung von « geschlossenen » Aufhängelementen, d. h. also Aufhängeschlaufen beschränkt. Vielmehr können als Aufhängelemente auch anders ausgebildete Elemente verwendet werden, wie beispielsweise Haken, Stiele mit verdickten Köpfen, die in Profilnuten der Führungsschiene und der hierzu besonders auszubildenden Rauch- oder Kochstäbe geführt werden, und dergleichen. In diesen Fällen wäre es dann auch nicht erforderlich, die Rauch- oder Kochstäbe einseitig fliegend zu haltern, wie dies bei der Verwendung von Aufhängeschlaufen unumgänglich ist.

**Patentansprüche**

1. Verfahren zum Aufreihen von auf Füllautomaten hergestellten Einzelwürsten auf Rauch- oder Kochstäbe mit Hilfe von Aufhängelementen, die nach dem Füllen beim Verschließen der gefüllten Wursthüllenabschnitte einzeln jeweils einer Verschlußklammer vorgelegt und von dieser eingebunden werden, dadurch gekennzeichnet, daß die Aufhängelemente beim Vorlegen vor die Verschlußklammern von einem Führungselement erfasst und von diesem mit der angebundenen Wurst auf den Rauch- bzw. Kochstab geleitet werden.

2. Verfahren nach Anspruch 1, dadurch gekennzeichnet, daß das Führungselement wenigstens nach dem Einbinden des Aufhängelements in die Verschlußklammer stillstehend gehalten wird und das Aufhängelement auf dem Führungselement gleitend zu dem Rauch- bzw. Kochstab bewegt wird.

3. Verfahren nach Anspruch 2, dadurch gekennzeichnet, daß das Führungselement zur Ausnützung der Schwerkraft für das Gleiten des Aufhängelements geneigt gehalten wird.

4. Verfahren nach Anspruch 2 oder 3, dadurch gekennzeichnet, daß die Gleitbewegung des Aufhängegliedes auf dem Führungselement durch eine motorisch erzeugte Kraft vorgenommen oder zumindest unterstützt wird.

5. Verfahren nach Anspruch 1, dadurch gekennzeichnet, daß zur Beförderung des Aufhängelements mit der daran angebundenen Wurst zum Rauch- bzw. Kochstab das Führungselement selbst bewegt wird.

6. Verfahren nach einem der vorhergehenden Ansprüche, dadurch gekennzeichnet, daß als Aufhängelement vorgefertigte oder mit dem Vorlegen bzw. Einbinden erst gebildeter Aufhängeschlaufen verwendet werden und die Rauch- bzw. Kochstäbe zur Aufnahme der Aufhängeschlaufen in bekannter Weise an einem Ende fliegend gehaltert werden.

7. Vorrichtung zum Aufreihen von auf Füllautomaten hergestellten Einzelwürsten (24) auf Rauch- oder Kochstäbe (32) mit Hilfe von Aufhängeelementen, die nach dem Füllen beim Verschließen der gefüllten Wursthüllenabschnitte (112) einzeln jeweils einer Verschlußklammer (92) vorgelegt und von dieser eingebunden werden, zur Verwendung in Verbindung mit einer vor der Füllrohrmündung des Füllautomaten angeordneten Einschnür- und Klammersetzeinrichtung (18), der eine Einrichtung (20) zum einzelweisen Vorlegen von vorgefertigten, geöffneten Aufhängeschlaufen (34) in die Bewegungsbahn eines der Einschnürwerkzeuge (76, 78) zugeordnet ist, gekennzeichnet durch einen in die vorgelegte Aufhängeschlaufe (34) gleichzeitig mit dem Einschnürwerkzeug (76) einführbaren Greifer (106), der einen Teil einer Führungseinrichtung zum Überführen der Aufhängeschlaufe (34) mit der angebundenen Wurst auf einen fliegend gehalterten Rauch- oder Kochstab (32) bildet.

8. Vorrichtung nach Anspruch 7, dadurch gekennzeichnet, daß der Greifer (106) an dem einen Ende einer sich im wesentlichen in Brätausstoßrichtung erstreckenden Führungsschiene (36) angeordnet ist, deren anderes Ende an den Rauch- bzw. Kochstab (32) anschließbar ist.

9. Vorrichtung nach Anspruch 8, dadurch gekennzeichnet, daß die Führungsschiene (36) zu dem Rauch- bzw. Kochstab (32) hin geneigt angeordnet ist.

10. Vorrichtung nach Anspruch 9, dadurch gekennzeichnet, daß die Rauch- oder Kochstäbe (32) gleichfalls geneigt angeordnet sind.

11. Vorrichtung nach einem der Ansprüche 8 bis 10, dadurch gekennzeichnet, daß die Führungsschiene (36) von zwei oder mehreren Klemmeinrichtungen (40) gehaltert ist, die zur Freigabe für die über die Führungsschiene (36) gleitenden Aufhängeschlaufen (34) nacheinander aufsteuerbar sind.

12. Vorrichtung nach Anspruch 11, dadurch gekennzeichnet, daß den Klemmeinrichtungen (40) die Gleitbewegung der Aufhängeschlaufen (34) auf der Führungsschiene erfassende Fühler (68) zum vorübergehenden Aufsteuern der Klemmeinrichtungen (40) zugeordnet sind.

13. Vorrichtung nach Anspruch 12, dadurch gekennzeichnet, daß die Fühler (68) als mechanische Tastfühler ausgebildet sind.

14. Vorrichtung nach Anspruch 12, dadurch gekennzeichnet, daß die Fühler (68) von Fotozellen mit gegenüberstehenden Lichtquellen gebildet sind.

15. Vorrichtung nach einem der Ansprüche 8 bis 14, dadurch gekennzeichnet, daß die Klemmeinrichtungen (40) und gegebenenfalls die Fühler (68) in Längsrichtung der Führungsschiene (36) verschieblich gelagert sind und daß eine Betätigungseinrichtung (46) vorgesehen ist, von welcher die Klemmeinrichtungen (40) und die Fühler (68) zum Einführen des Greifers (106) in die vorgelegte Aufhängeschlaufe (34) gesteuert hin und her verschiebbar sind.

16. Vorrichtung nach einem der Ansprüche 8 bis 15, gekennzeichnet durch eine sich unterhalb der Ausstoßbahn der Wurst (24) erstreckende, antreibbare Fördervorrichtung (22), von welcher die Würste zu dem Rauch- bzw. Kochstab beförderbar sind.

17. Vorrichtung nach Anspruch 7 zur Durchführung des Verfahrens nach Anspruch 5, dadurch gekennzeichnet, daß die Führungseinrichtung von einem endlosen Band- oder Kettentrieb gebildet ist, an welchem in oder mehrere die Aufhängeschlaufen erfassende und dem Rauch- bzw. Kochstab zuführende Mitnehmerhaken angeordnet ist.

18. Vorrichtung nach einem der Ansprüche 7 bis 17, gekennzeichnet durch eine an die Führungseinrichtung anschließende Halterung für die Rauch- bzw. Kochstäbe, bestehend aus einem Ständer (28) und einem darauf drehbar und um gleiche Teilungswinkel fortschaltbaren Kopf (30) mit Fassungen zur Aufnahme einer entsprechenden Anzahl von Stäben (32) in sternförmiger Anordnung, von denen jeweils einer an die Führungseinrichtung anschließt.

**Claims**

1. A method of transferring individual sausages manufactuered in automatic stuffing machines on to smoking or boiling rods by means of hanging elements which, after the stuffing operation, are individually presented during the closure of the stuffed sausage casing portions to a respective sealing clip and are fastened thereby, characterised in that upon being presented before the sealing clips the suspension elements are engaged by a guide element and are guided thereby with the fastened sausage on to the smoking or boiling rod.

2. A method according to Claim 1, characterised in that, at least after the fastening of the hanging element into the sealing clip, the guide element is held stationary and the hanging element is moved, sliding on the guide element, towards the smoking or boiling rod.

3. A method according to Claim 2, characterised in that, to make use of gravity, the guide element is held inclined for the sliding of the hanging element.

4. A method according to Claim 2 or 3, characterised in that the sliding movement of the hanging element on the guide element is effected or at least assisted by a force imparted by motor.

5. A method according to Claim 1, characterised in that the guide element itself is moved so as to convey the hanging element with the sausage fastened thereto to the smoking or boiling rod.

6. A method according to any of the preceding claims, characterised in that hanging loops, which are prefabricated or formed only upon presentation and/or fastening, are used as the hanging element, and the smoking or boiling rods for receiving the hanging loops are mounted in known manner overhung at one end.

7. An apparatus for transferring individual sausages (24) manufactured in automatic stuffing machines on to smoking or boiling rods (32) by means of hanging elements which, after the stuffing operation, are individually presented during closure of the stuffed sausage casing portions (112) to a respective sealing clip (92) and are fastened by this latter, for use in conjunction with a constricting and clip-applying device (18) which is disposed in front of the stuffing tube orifice of the stuffing machine and which is associated with a device (20) for individually presenting prefabricated, open hanging loops (34) into the movement path of one of the constricting tools (76, 78) characterised by a gripper device (106) which can be inserted into the presented hanging loop (34) simultaneously with the constricting tool (76) and which forms part of a guide means for transferring the hanging loop (34) with the fastened sausage on to a smoking or boiling rod (32) mounted overhung.

8. An apparatus according to Claim 7, characterised in that the gripper device (106) is disposed at one end of a guide rail (36) which extends substantially in the direction in which forcemeat is ejected and the other end of which can adjoin the smoking or boiling rod (32).

9. An apparatus according to Claim 8, characterised in that the guide rail (36) is arranged at an angle to the smoking or boiling rod (32).

10. An apparatus according to Claim 9, characterised in that the smoking or boiling rods (32) are also arranged inclined.

11. An apparatus according to any one of Claims 8 to 10, characterised in that the guide rail (36) is supported by two or more clamping devices (40) which can be actuated successively to release the hanging loops (34) sliding along the guide rail (36).

12. An apparatus according to Claim 11, characterised in that the clamping devices (40) are associated with sensors (68) serving for the temporary actuation of the clamping devices (40) and detecting the sliding movement of the hanging loops (34) on the guide rail.

13. An apparatus according to Claim 12, characterised in that the sensors (68) are in the form of mechanical contact sensors.

14. An apparatus according to Claim 12, characterised in that the sensors (68) comprise photoelectric cells with opposed light sources.

15. An apparatus according to any one of Claims 8 to 14, characterised in that the clamping devices (40) and, optionally, the sensors (68) are mounted displaceably in the longitudinal direction of the guide rail (36), and in that an actuating device (46) is provided by means of which the clamping devices (40) and the sensors (68) are displaceable in a controlled reciprocating movement for the insertion of the gripper device (106) into the presented hanging loop (34).

16. An apparatus according to any one of Claims 8 to 15, characterised by a driveable conveyor device (22) extending under the ejection path of the sausage (24), by means of which the sausages can be conveyed to the smoking or boiling rod (32).

17. An apparatus according to Claim 7 for carrying out the method according to Claim 5, characterised in that the guide device comprises an endless belt or chain drive, on which there are provided one or more entrainment hooks which engage the hanging loops and take them to the smoking or boiling rod. ·

18. An apparatus according to any one of Claims 7 to 17, characterised by a support for the smoking or boiling rods which adjoins the guide device and comprises a stand (28) and a head (30) which is rotatable thereon and can be indexed by equal pitch angles, with fittings for accommodating a corresponding number of rods (32) in a stellate arrangement, each of which respectively adjoins the guide device.

**Revendications**

1. Procédé pour enfiler des saucisses individuelles, fabriquées sur des machines de remplissage, sur des barres d'enfumage ou de cuisson à l'aide d'organes de suspension, ces saucisses, après remplissage et pendant la fermeture des sections de boyau à saucisses ainsi remplies, étant pourvues chacune, individuellement, d'une agrafe de fermeture et reliées entre elles par ces agrafes, ce procédé étant caractérisé par le fait que les organes de suspension, lors de leur passage devant les agrafes de fermeture, sont saisis par un organe de guidage et transférés avec la saucisse qu'ils portent sur la barre d'enfumage ou de cuisson.

2. Procédé selon la revendication 1, caractérisé par le fait que l'organe de guidage, peu après la saisie de l'organe de suspension, est immobilisé dans l'agrafe de fermeture, et que l'organe de suspension se déplace par glissement sur l'organe de guidage en direction de la barre d'enfumage ou de cuisson.

3. Procédé selon la revendication 2, caractérisé par le fait que l'organe de guidage est incliné afin d'exploiter la force de gravité pour assurer le glissement de l'organe de suspension.

4. Procédé selon l'une ou l'autre des revendications 2 ou 3, caractérisé par le fait que le mouvement de glissement de l'organe de suspension sur l'organe de guidage est obtenu ou tout au moins assisté par une force dérivée d'un moyen moteur.

5. Procédé selon la revendication 1, caractérisé par le fait que, pour assurer le transport de l'organe de suspension porteur de la saucisse vers la barre d'enfumage ou de cuisson, c'est l'organe de guidage proprement dit qui est actionné.

6. Procédé selon l'une quelconque des revendications 1 à 5, caractérisé par le fait qu'on utilise seulement, en tant qu'organe de suspension, des boucles de suspension préformées ou formées lors du sectionnement ou de l'engagement des boucles de suspension, et que les barres d'enfumage ou de cuisson sont portées en porte-à-faux à une extrémité, selon le mode connu, pour la réception desdites boucles de suspension.

7. Dispositif pour enfiler des saucisses, fabriquées sur une machine automatique de remplissage (24), sur des barres d'enfumage ou de cuisson (32) à l'aide d'organes de suspension, ces saucisses, après remplissage et pendant la fermeture des sections de boyau à saucisses (112) ainsi remplies, recevant chacune, individuellement, une agrafe de fermeture (92) et étant reliées entre elles par ces agrafes, en vue de leur utilisation en combinaison avec un dispositif d'étranglement également conçu pour poser les agrafes (18), ce dispositif étant disposé en amont de l'embouchure d'un tube de remplissage et étant par ailleurs associé à un dispositif (20) pour la présentation individuelle des boucles préformées et ouvertes (34) sur le parcours d'un des outils d'étranglement (76, 78), ce dispositif étant caractérisé par le fait qu'il comporte une griffe (106) pouvant être introduite en même temps que l'outil d'étranglement (76) dans la boucle de suspension (34), cette griffe faisant partie d'un dispositif de guidage destiné à transférer la boucle de suspension (34) avec la saucisse qu'elle porte, vers une barre d'enfumage ou de cuisson (32) maintenue en porte-à-faux par une extrémité.

8. Dispositif selon la revendication 7, caractérisé par le fait que la griffe (106) est disposée à une extrémité d'un rail de guidage (36) principalement orienté dans le sens de l'éjection du produit sortant du poste d'enfumage ou de cuisson, et que l'autre extrémité de ce rail peut être raccordée à la barre d'enfumage ou de cuisson (32).

9. Dispositif selon la revendication 8, caractérisé par le fait que le rail de guidage (36) est disposé de façon à être incliné vers la barre d'enfumage ou de cuisson (32).

10. Dispositif selon la revendication 9, caractérisé par le fait que les barres d'enfumage ou de cuisson (32) ont la même inclinaison.

11. Dispositif selon l'une quelconque des revendications 8 à 10, caractérisé par le fait que le rail de guidage (36) est maintenu par deux ou un plus grand nombre de dispositifs de serrage (40) qui peuvent être commandés successivement pour libérer les boucles de suspension (34) qui coulissent sur le rail de guidage (36).

12. Dispositif selon la revendication 11, caractérisé par le fait que les dispositifs de serrage (40) sont munis de capteurs (68) afin de détecter le mouvement coulissant des boucles de suspension (34) sur le rail de guidage afin d'actionner temporairement ces dispositifs de serrage (40).

13. Dispositif selon la revendication 12, caractérisé par le fait que les capteurs (68) sont constitués par des palpeurs mécaniques.

14. Dispositif selon la revendication 12, caractérisé par le fait que les capteurs (68) sont constitués par des cellules photoélectriques disposées en regard de sources lumineuses.

15. Dispositif selon l'une quelconque des revendications 8 à 14, caractérisé par le fait que les dispositifs de serrage (40) et éventuellement les capteurs (68) sont montés de façon à pouvoir coulisser dans le sens longitudinal du rail de guidage (36) et qu'il est prévu un dispositif d'actionnement (46) grâce auquel les dispositifs de serrage (40) et les capteurs (68) sont positivement commandés de façon à coulisser dans un sens ou dans l'autre afin d'introduire la griffe (106) dans la boucle de suspension (34) qui se présente.

16. Dispositif selon l'une quelconque des revendications 8 à 15, caractérisé par le fait qu'il comporte un convoyeur commandé positivement (22), disposé parallèlement au-dessous du trajet d'éjection (24) des saucisses, afin d'assurer le transfert des saucisses vers les barres d'enfumage ou de cuisson.

17. Dispositif selon la revendication 7, pour la mise en œuvre du procédé selon la revendication 5, caractérisé par le fait que le dispositif de guidage est constitué par un convoyeur à courroie ou à chaîne sans fin, sur lequel sont disposés un ou plusieurs crochets destinés à saisir les boucles de suspension (34) et à les diriger vers la barre d'enfumage ou de cuisson (32).

18. Dispositif selon l'une quelconque des revendications 7 à 17, caractérisé par le fait qu'il comporte en outre un support accouplé au dispositif de guidage des barres d'enfumage ou de cuisson, ce support comprenant un montant (28) et une tête (30) montée en rotation sur ce montant et pouvant effectuer des mouvements équiangles de rotation partielle, cette tête étant munie de moyens de serrage propres à saisir un nombre correspondant de barres (32) disposées en étoile et qui se raccordent à tour de rôle au dispositif de guidage.

Fig. 1

0 129 864

## Fig. 2

0 129 864

**Fig. 3**

0 129 864

Fig. 4

Fig. 5

Fig. 6

Fig. 7

Fig. 8

0 129 864

Fig. 9

Fig. 10

8